# EUROPEAN PATENT APPLICATION

(11) **EP 1 808 109 A2**
(43) Date of publication of application: **18.07.2007**
(21) Application number: 07100380.0
(22) Date of filing: 11.01.2007
(51) Int. Cl.: A47J 27/21

(54) **Container for fluids to be heated**

(30) Priority: 12.01.2006 IT VE20060001 U
(71) Applicant: I.R.C.A. S.p.a. Industria Resistenze Corazzate e Affini, 31020 San Vendemiano (IT)
(72) Inventor: Virzi, Andrea I.R.C.A. S.p.A.-Ind. Res. Cor. e Af, 31020, San Vendemiano (IT); Capraro, Duilio I.R.C.A. S.p.A.-Ind. Res. Cor. e, 31020, San Vendemiano (IT)
(74) Representative: Piovesana, Paolo

(57) **Abstract**

A fluid container, characterised in that at least one of its walls in contact with the liquid presents at least one slot (6) within which an armoured resistance element (8) is fixed to close the slot.

## Description

The present invention relates to a container for fluids to be heated.

Water, oil or other fluids contained in household electrical appliances and in professional equipment used for producing hot drinks (water heaters and coffee machines), for cooking food (fryers and water baths), for washing clothes and crockery (washing machines, dishwashers), for steam generation and for room conditioning, are heated by the use of armoured resistance elements either immersed in the liquid to be raised in temperature or in heating contact with a surface of the container.

The solution of immersing the resistance element in the fluid presents certain drawbacks, and in particular:
- corrosion phenomena, with deposition of limestone and food residues,
- hindrance to liquid flow,
- unpleasant outer appearance.

The solution of fixing the resistance element to the outside of the container presents other drawbacks, and in particular:
- low heat transfer efficiency,
- extremely complex and costly construction,
- a certain difficulty in achieving effective brazing, which can result in quality problems for the product obtained.

Other solutions have been proposed, with the resistance element attached to the fluid container by adhesive layers or by bearing thereagainst, which present the drawback of low heat transfer due to the poor coupling.

Finally, the solution of heating by resistive film circuits printed by silk-screen technology still presents the drawback of being extremely costly and difficult to control.

An object of the invention is to eliminate these drawbacks by devising a container provided with resistance heating elements which can be produced in a simple and comfortable manner.

Another object of the invention is to provide a container presenting high heat transfer.

This and further objects which will be apparent from the ensuing description are attained according to the invention by a fluid container as claimed in claim 1.

The present invention is further clarified hereinafter with reference to the accompanying drawings, in which:
Figure 1 is a perspective view of a container according to the invention,
Figure 2 shows it from below, and
Figures 3 and 4 are perspective views from above and from below showing a variant thereof.

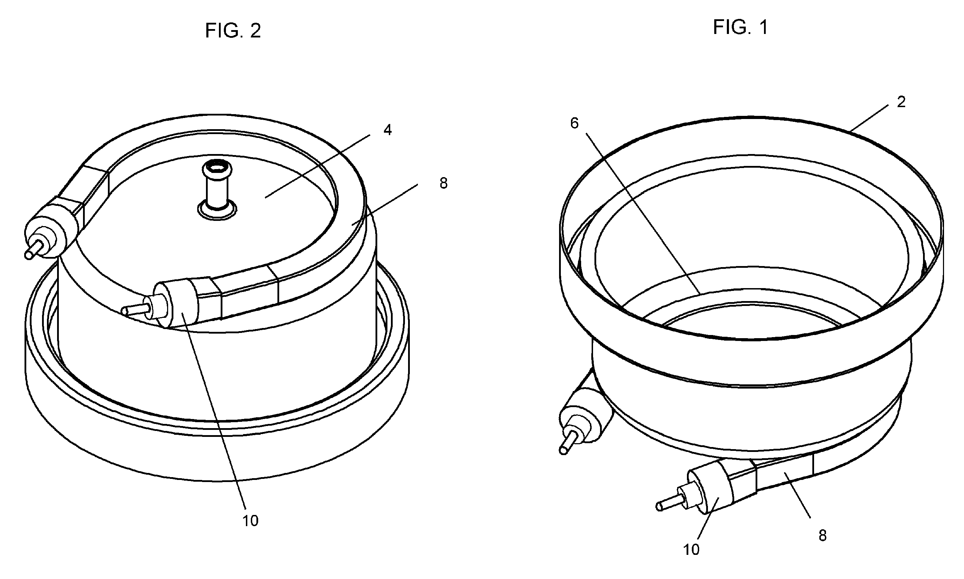

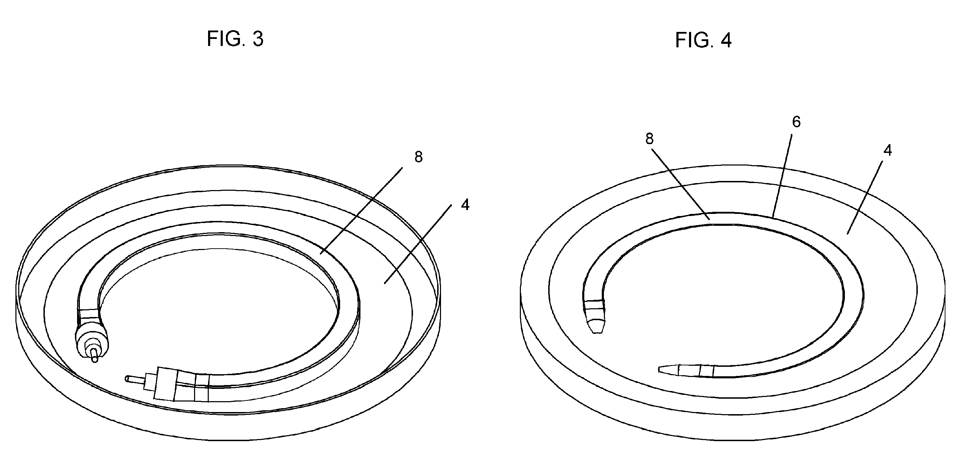

As can be seen from the figures, that container of the invention shown in Figures 1 and 2 consists of a receptacle 2, provided with a base 4 in which a slot 6 is provided, into which an armoured resistance element 8 is inserted with its contacts 10 external to the container.

The constituent material of the resistance element sheath, which can be the same as the material of the base, can be copper, aluminium or steel.

The resistance element is joined to the base by TIG, MIG or laser welding.

It can also be joined by brazing, however in that case the operation involves only the contour of the slot 6 and hence does not require considerable preparation.

The resistance element can be circular, square, trapezoidal, or triangular in shape, and that internal surface in contact with the container fluid can be coated with anti-adherent material, such as teflon.

From the aforegoing it is apparent that the container of the invention presents numerous advantages, and in particular:
- it presents high heat transfer capacity by virtue of the direct contact between the resistance element and the liquid to be heated,
- it is simple to produce by virtue of simple brazing or welding operations along the slot contours.

In the embodiment shown in Figures 3 and 4 the resistance element 8 is partially inserted into the container.

## Claims

1. A fluid container, **characterised in that** at least one of its walls in contact with the liquid presents at least one slot (6) within which an armoured resistance element (8) is fixed to close the slot.

2. A container as claimed in claim 1, **characterised in that** the resistance element is of circular cross-section.

3. A container as claimed in claim 1, **characterised in that** the resistance element is of square cross-section.

4. A container as claimed in claim 1, **characterised in that** the resistance element is of triangular cross-section.

5. A container as claimed in claim 1, **characterised in that** the resistance element is coated with anti-adherent material.

6. A container as claimed in claim 1, **characterised in that** the resistance element is partially inserted into the container.
